(19)

Europäisches
Patentamt

European
Patent Office

Office européen
des brevets

(11) **EP 4 148 852 A1**

(12) **EUROPEAN PATENT APPLICATION**
published in accordance with Art. 153(4) EPC

(43) Date of publication:
**15.03.2023 Bulletin 2023/11**

(21) Application number: **20939167.1**

(22) Date of filing: **05.06.2020**

(51) International Patent Classification (IPC):
*H01M 10/0567* $^{(2010.01)}$    *H01M 10/0525* $^{(2010.01)}$
*H01M 4/62* $^{(2006.01)}$

(52) Cooperative Patent Classification (CPC):
**H01M 4/62; H01M 10/0525; H01M 10/0567;**
Y02E 60/10

(86) International application number:
**PCT/CN2020/094654**

(87) International publication number:
**WO 2021/243702 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventors:
• **WANG, Kefei
Ningde City, Fujian 352100 (CN)**
• **SHI, Liang
Ningde City, Fujian 352100 (CN)**

(74) Representative: **Klunker IP
Patentanwälte PartG mbB
Destouchesstraße 68
80796 München (DE)**

(54) **ELECTROCHEMICAL DEVICE AND ELECTRONIC DEVICES**

(57)    This application relates to an electrochemical apparatus and an electronic apparatus. Specifically, this application provides an electrochemical apparatus, including a positive electrode, a negative electrode, and an electrolyte. The positive electrode includes a positive electrode current collector and a positive electrode mixture layer formed on the positive electrode current collector, where the electrolyte contains a specific proportion of lithium difluorophosphate, and the positive electrode mixture layer has a relatively small thickness change rate. The electrochemical apparatus in this application has improved interval cycling performance and floating charge performance.

EP 4 148 852 A1

## Description

### TECHNICAL FIELD

This application relates to the field of energy storage, specifically to an electrochemical apparatus and an electronic apparatus, and in particular to a lithium-ion battery.

### BACKGROUND

With the development of technologies and the increasing demands for mobile apparatuses, demands for electrochemical apparatuses (for example, lithium-ion batteries) have increased significantly, and thus higher requirements are imposed on performance of lithium-ion batteries, especially interval cycling performance and floating charge performance of lithium-ion batteries.

The performance of lithium-ion batteries mainly depends on characteristics of the electrodes, electrolyte and separator. In addition, charge/discharge capacity of lithium-ion batteries decreases during cycling, and one of the causes for this problem is the deterioration of interface stability. To improve interface stability, developers tend to develop new battery chemical systems or introduce other substances into existing battery technology. However, during preparation of a lithium-ion battery, problems such as difficulty in proportioning due to poor matching of raw materials are often found, which can adversely affect the performance of the lithium-ion battery.

In view of this, it is necessary to provide an electrochemical apparatus and an electronic apparatus that have improved performance.

### SUMMARY

Embodiments of this application provide an electrochemical apparatus and an electronic apparatus, so as to resolve at least one problem existing in the related art to at least some extent.

According to one aspect of this application, this application provides an electrochemical apparatus, including a positive electrode, a negative electrode, and an electrolyte. The positive electrode includes a positive electrode current collector and a positive electrode mixture layer formed on the positive electrode current collector, where the electrolyte contains lithium difluorophosphate, based on a total weight of the electrolyte, a proportion of the lithium difluorophosphate is 0.001 wt% to 2 wt%; and the positive electrode mixture layer after being immersed in diethyl carbonate at 85°C for 120 hours has a thickness change rate of less than 10%.

According to an embodiment of this application, the electrolyte includes a carbonate, and the carbonate includes a cyclic carbonate and a linear carbonate.

According to an embodiment of this application, the electrolyte includes a carbonate and a carboxylate, where the carbonate includes at least one of a cyclic carbonate or a linear carbonate.

According to an embodiment of this application, the positive electrode mixture layer includes an additive having a hydrophilic group and a lipophilic group.

According to an embodiment of this application, the additive has at least one of the following characteristics:

(a) an oxidation potential of not less than 4.5 V and a reduction potential of not greater than 0.5 V;
(b) a surface tension of not greater than 40 mN/m;
(c) including an unsaturated carboxylic acid group; and
(d) a proportion of not greater than 3000 ppm based on a total weight of the positive electrode mixture layer.

According to an embodiment of this application, the additive includes at least one of 2-dodecyl acrylate, polyethylene glycol monomethyl ether acrylate, polyethylene glycol dimethacrylate, acrylic acid (2-ethylhexyl) acrylate, acrylate non-ionic fluorocarbon acrylate surfactant, dodecyl methacrylate, acrylic acid ester copolymer, copolymer of maleic and acrylic acid, or ethylene acrylic acid copolymer.

According to an embodiment of this application, X mg of lithium difluorophosphate in the electrolyte and a reaction area Y $m^2$ of the positive electrode mixture layer satisfy the following relationship: $10 \leq X/Y \leq 100$.

According to an embodiment of this application, the electrolyte further includes at least one of a dinitrile compound, a trinitrile compound, sultone, fluorocarbonate, or unsaturated ethylene carbonate.

According to an embodiment of this application, the positive electrode mixture layer includes a positive electrode active material, where the positive electrode active material includes lithium-containing transition metal oxides having different median particle sizes.

According to an embodiment of this application, the lithium-containing transition metal oxide includes a compound represented by a general formula (1):

$$Li_aM1_bM2_cM3_dO_2 \qquad (1)$$

where:

M1 is selected from at least one of Co, Ni, or Mn;
M2 is selected from at least one of Mg, Ti, Zr, Ge, Nb, Al, or Sn;
M3 is an element other than Li, M1, and M2;
$0.5 \leq a < 1.1$;
$0.8 \leq b < 1.2$;
$0.002 \leq c \leq 0.05$; and
$0 \leq d \leq 0.05$.

According to an embodiment of this application, the lithium-containing transition metal oxide includes Mg and at least one metal element selected from Ti, Zr, Ge, Nb, Al, and Sn.

According to another aspect of this application, this application provides an electronic apparatus, including the electrochemical apparatus according to this application.

Additional aspects and advantages of the embodiments of this application are partly described and presented in subsequent descriptions, or explained by implementation of the embodiments of this application.

## DESCRIPTION OF EMBODIMENTS

Embodiments of this application are described in detail below. The embodiments of this application should not be construed as limitations on the application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements. The term "at least one type of" has the same meaning as the term "at least one of".

An electrode (positive electrode or negative electrode) of an electrochemical apparatus (for example, lithium-ion battery) is generally prepared by the following method: mixing an active material, a conductive agent, a thickener, a binder and a solvent, and then applying the resulting slurry mix on a current collector. However, matching between the solvent and the binder or between the solvent and the active material is generally poor, so that proportioning is difficult. In addition, a theoretical capacity of the electrochemical apparatus may change with the type of the active material. As the cycling proceeds, charge/discharge capacity of the electrochemical apparatus generally decreases. This is because electrode interfaces of the electrochemical apparatus change during charging and/or discharging. The interfaces include an interface between the electrode and the electrolyte, an interface between the current collector and the electrode, and an interface between the electrode active material and an additive. Decreased interface stability causes the electrode active material to fail to play its function.

In this application, a specific positive electrode mixture layer and the electrolyte are used to ensure interface stability of the electrochemical apparatus during cycling, thereby improving interval cycling performance and floating charge performance of the electrochemical apparatus.

This application provides an electrochemical apparatus, including a positive electrode, a negative electrode, and an electrolyte as described below.

I. Positive electrode

The positive electrode includes a positive electrode current collector and a positive electrode mixture layer disposed on one or both surfaces of the positive electrode current collector. The positive electrode mixture layer includes a positive electrode active material layer, where the positive electrode active material layer includes a positive electrode active material. The positive electrode mixture layer may be one or more layers, and each of the plurality of layers of the positive electrode active material may contain the same or different positive electrode active materials.

Thickness change rate of the positive electrode mixture layer

One main feature of the electrochemical apparatus of this application is that the positive electrode mixture layer after being immersed in diethyl carbonate at 85°C for 120 hours has a thickness change rate of less than 10%. In some embodiments, the positive electrode mixture layer after being immersed in diethyl carbonate at 85°C for 120 hours has a thickness change rate of less than 8%. In some embodiments, the positive electrode mixture layer after being immersed in diethyl carbonate at 85°C for 120 hours has a thickness change rate of less than 6%. In some embodiments, the positive electrode mixture layer after being immersed in diethyl carbonate at 85°C for 120 hours has a thickness change rate of less than 5%. In some embodiments, the positive electrode mixture layer after being immersed in diethyl carbonate at 85°C for 120 hours has a thickness change rate of less than 4%.

The "thickness change rate" of the positive electrode mixture layer refers to a degree of thickness change of the positive electrode mixture layer before and after being immersed in diethyl carbonate at 85°C for 120 hours.

The thickness change rate of the positive electrode mixture layer can be determined by the following method: die-cutting the positive electrode having the positive electrode mixture layer on both sides of the positive electrode current collector into a disc shape with a diameter of $14\pm0.2$ mm, which is used as a test piece; measuring a thickness (t0) of the center part of the test piece; immersing and leaving the test piece horizontally in diethyl carbonate at a temperature of $85\pm1$°C for $120\pm0.3$ hours; and taking out the test piece after immersion, letting the test piece stand at room temperature for 30 minutes, and then measuring a thickness (t1) of the center part of the test piece. The thickness change rate of the positive electrode mixture layer is calculated by using the following equation:

$$\text{Thickness change rate} = (t1\text{-}t0)/t0\times100\%.$$

The thickness change rate of the positive electrode mixture layer can be controlled by adding an additive into the positive electrode slurry or providing an additive coating on a surface of the positive electrode active material layer. The type of the positive electrode active material and the sizes of the positive electrode active material particles have little influence on the thickness change rate of the positive electrode mixture layer. The thickness change rate of the positive electrode mixture layer being within the foregoing range can significantly improve the interval cycling performance and floating charge performance of the electrochemical apparatus.

Additive

According to some embodiments of this application, the positive electrode mixture layer includes an additive.

In some embodiments, the additive has a hydrophilic group and a lipophilic group.

In some embodiments, the additive has an oxidation potential of not less than 4.5 V and a reduction potential of not greater than 0.5 V In some embodiments, the additive has an oxidation potential of not less than 5 V and a reduction potential of not greater than 0.3 V The additive with the foregoing oxidation/reduction potential has stable electrochemical performance, helping improve the interval cycling performance and floating charge performance of the electrochemical apparatus.

In some embodiments, the surface tension of the additive is not greater than 40 mN/m. In some embodiments, the surface tension of the additive is not greater than 30 mN/m. In some embodiments, the surface tension of the additive is not greater than 25 mN/m. In some embodiments, the surface tension of the additive is not greater than 20 mN/m. In some embodiments, the surface tension of the additive is not greater than 15 mN/m. In some embodiments, the surface tension of the additive is not greater than 10 mN/m. The surface tension of the additive is measured under the condition of an additive NMP solution with a solid content of 1%. The additive with the foregoing surface tension makes the positive electrode mixture layer have a good interface, helping improve the interval cycling performance and floating charge performance of the electrochemical apparatus.

The surface tension of the additive can be measured by using the following method: testing the additive NMP solution with a solid content of 1% by using the JC2000D3E contact angle measuring instrument, testing each sample for at least 3 times, and taking at least 3 values and averaging them to obtain the surface tension of the additive.

In some embodiments, the additive includes an unsaturated carboxylic acid group. In some embodiments, the unsaturated carboxylic acid group includes at least one of vinyl ester, vinyl chloride, acrylate, vinyl ether acrylate, crotonate, propiolate, butynoate or carboxylate modified with acrylamide, acrylonitrile and vinyl ether groups.

In some embodiments, the additive includes at least one of the following: 2-dodecyl acrylate, polyethylene glycol monomethyl ether acrylate, polyethylene glycol dimethacrylate, acrylic acid (2-ethylhexyl) acrylate, acrylate non-ionic fluorocarbon acrylate surfactant, dodecyl methacrylate, acrylic acid ester copolymer, copolymer of maleic and acrylic acid, or ethylene acrylic acid copolymer.

In some embodiments, based on a total weight of the positive electrode mixture layer, the proportion of the additive is not greater than 3000 ppm. In some embodiments, based on the total weight of the positive electrode mixture layer, the proportion of the additive is not greater than 2500 ppm. In some embodiments, based on the total weight of the positive electrode mixture layer, the proportion of the additive is not greater than 2000 ppm. In some embodiments, based on the total weight of the positive electrode mixture layer, the proportion of the additive is not greater than 1500 ppm. In some embodiments, based on the total weight of the positive electrode mixture layer, the proportion of the additive is not greater than 1000 ppm. In some embodiments, based on the total weight of the positive electrode mixture layer, the proportion of the additive is not greater than 500 ppm. In some embodiments, based on the total weight of the positive electrode mixture layer, the proportion of the additive is not greater than 200 ppm. The proportion of the additive being within the foregoing range helps improve the interval cycling performance and floating charge performance of the electrochemical apparatus.

Positive electrode active material

The type of the positive electrode active material is not particularly limited, provided that metal ions (for example, lithium ions) can be electrochemically absorbed and released. In some embodiments, the positive electrode active material refers to a substance containing lithium and at least one transition metal. Examples of the positive electrode active material may include, but are not limited to, a lithium and transition metal composite oxide and a lithium-containing transition metal phosphate compound.

In some embodiments, the positive electrode active material includes lithium-containing transition metal oxides having different median particle sizes. In some embodiments, the lithium-containing transition metal oxides having different median particle sizes have the same or different chemical compositions.

In some embodiments, the lithium-containing transition metal oxide includes a compound represented by a general formula (1),

$$Li_a M1_b M2_c M3_d O_2 \qquad (1)$$

where:

M1 is selected from at least one of Co, Ni, or Mn;
M2 is selected from at least one of Mg, Ti, Zr, Ge, Nb, Al, or Sn;
M3 is an element other than Li, M1, and M2;
$0.5 \le a < 1.1$;
$0.8 \le b < 1.2$;
$0.002 \le c \le 0.05$; and
$0 \le d \le 0.05$.

In some embodiments, M1 includes at least one of Co or Ni. When M1 includes at least one of Co or Ni, a proportion of the at least one of Co or Ni in the lithium-containing transition metal oxide is not less than 50 mol%; in some embodiments, not less than 60 mol%; in some embodiments, not less than 70 mol%; in some embodiments, not less than 80 mol%; or in some embodiments, not less than 90 mol%.

In some embodiments, M1 includes Co. In some embodiments, M1 is Co. When M1 includes Co, a proportion of Co in the lithium-containing transition metal oxide is not less than 30 mol%; in some embodiments, not less than 50 mol%; in some embodiments, not less than 65 mol%; in some embodiments, not less than 80 mol%; in some embodiments, not less than 90 mol%; or in some embodiments, not less than 95 mol%. The lithium-containing transition metal oxide containing Co helps increase density of the positive electrode mixture layer. The Co content in the lithium-containing transition metal oxide within the foregoing ranges may further increase the density of the positive electrode mixture layer.

In some embodiments, M2 includes Mg. In some embodiments, with respect to the M1 content, a proportion of Mg is not less than 0.01 mol%. In some embodiments, with respect to the M1 content, the proportion of Mg is not less than 0.05 mol%. In some embodiments, with respect to the M1 content, the proportion of Mg is not less than 0.07 mol%. In some embodiments, with respect to the M1 content, the proportion of Mg is not greater than 0.5 mol%. In some embodiments, with respect to the M1 content, the proportion of Mg is not greater than 0.2 mol%. In some embodiments, with respect to the M1 content, the proportion of Mg is not greater than 0.1 mol%. In some embodiments, with respect to the M1 content, the proportion of Mg falls within a range defined by any two of the foregoing endpoints. When the proportion of Mg in the lithium-containing transition metal oxide falls within the foregoing ranges, the element Mg can effectively play its function, improving the interval cycling performance and floating charge performance of the electrochemical apparatus.

In some embodiments, M2 further includes at least one of Ti, Zr, Ge, Nb, Al, and Sn.

In some embodiments, M2 further includes at least one of Ti, Zr, Ge, or Nb. In some embodiments, with respect to the M1 content, a proportion of the at least one of Ti, Zr, Ge, or Nb is not less than 0.005 mol%. In some embodiments, with respect to the M1 content, the proportion of the at least one of Ti, Zr, Ge, or Nb is not less than 0.008 mol%. In some embodiments, with respect to the M1 content, the proportion of the at least one of Ti, Zr, Ge, or Nb is not less than 0.01 mol%. In some embodiments, with respect to the M1 content, the proportion of the at least one of Ti, Zr, Ge, or Nb is not greater than 0.3 mol%. In some embodiments, with respect to the M1 content, the proportion of the at least one of Ti, Zr, Ge, or Nb is not greater than 0.1 mol%. In some embodiments, with respect to the M1 content, the proportion of the at least one of Ti, Zr, Ge, or Nb is not greater than 0.05 mol%. In some embodiments, with respect to the M1 content, the proportion of the at least one of Ti, Zr, Ge, or Nb falls within a range defined by any two of the foregoing endpoints. The proportion of the at least one of Ti, Zr, Ge, or Nb in the lithium-containing transition metal oxide being within the foregoing ranges helps improve the interval cycling performance and floating charge performance of the electrochemical apparatus.

In some embodiments, M2 further includes at least one of Al or Sn. In some embodiments, with respect to the M1 content, a proportion of the at least one of Al or Sn is not less than 0.01 mol%. In some embodiments, with respect to the M1 content, the proportion of the at least one of Al or Sn is not less than 0.05 mol%. In some embodiments, with respect to the M1 content, the proportion of the at least one of Al or Sn is not less than 0.07 mol%. In some embodiments, with respect to the M1 content, the proportion of the at least one of Al or Sn is not greater than 0.5 mol%. In some embodiments, with respect to the M1 content, the proportion of the at least one of Al or Sn is not greater than 0.2 mol%. In some embodiments, with respect to the M1 content, the proportion of the at least one of Al or Sn is not greater than 0.1 mol%. In some embodiments, with respect to the M1 content, the proportion of the at least one of Al or Sn falls within a range defined by any two of the foregoing endpoints. The proportion of the at least one of Al, or Sn in the lithium-containing transition metal oxide being within the foregoing ranges helps improve the interval cycling performance and floating charge performance of the electrochemical apparatus.

In some embodiments, $0.004 \leq c \leq 0.02$. In some embodiments, $0.006 \leq c \leq 0.01$. The c being within the foregoing ranges helps improve the interval cycling performance and floating charge performance of the lithium-ion battery.

The lithium-containing transition metal oxide may contain M2 in a plurality of manners, which is not particularly limited. In some embodiments, M2 is present in lithium-containing transition metal oxide particles. In some embodiments, M2 is uniformly solid dispersed in the lithium-containing transition metal oxide. In some embodiments, M2 presents composition uniformity in the lithium-containing transition metal oxide. In some embodiments, M2 forms a compound layer on the surface of the lithium-containing transition metal oxide.

In some embodiments, M3 includes at least one of the following elements: alkali metal elements other than Li, alkaline earth metal elements other than Mg, Group IIIa metal elements, Group IVb metal elements other than Ti and Zr, Group Vb metal elements other than Nb, Group VIb metal elements, Group VIIb metal elements other than Mn, Group VIII metal elements other than Co and Ni, Group Ib metal elements, Zn, Group IIIa metal elements other than Al, Group IVa metal elements other than Sn and Pb, P or Bi.

In some embodiments, M3 includes at least one of the following elements: Na, K, Rb, Be, Ca, Sr, Ba, Sc, Y, La, Hf, V, Ta, Cr, Mo, W, Tc, Re, Fe, Ru, Rh, Cu, Ag, Au, Zn, B, Ca, In, Si, P, or Bi.

In some embodiments, the lithium-containing transition metal oxide contains no M3 (that is, d=0).

In some embodiments, the lithium-containing transition metal oxide includes at least one of $LiNi_{0.81}Co_{0.16}Al_{0.03}O_2$, $LiNi_{0.81}Co_{0.16}Mg_{0.03}O_2$, $LiNi_{0.81}Co_{0.16}Si_{0.03}O_2$, $LiNi_{0.81}Co_{0.16}Ti_{0.03}O_2$, $LiCo_{0.96}Ti_{0.04}O_2$, $LiCo_{0.998}Mg_{0.0008}Ti_{0.0004}Al_{0.0008}O_2$, $LiCo_{0.994}Mg_{0.0024}Ti_{0.0024}Al_{0.0024}O_2$, $LiCo_{0.9988}Mg_{0.0008}Ti_{0.0004}O_2$, $LiCo_{0.9964}Mg_{0.0024}Ti_{0.0012}O_2$ or $LiCo_{0.334}Ni_{0.33}Mn_{0.33}Mg_{0.0024}Ti_{0.0012}Al_{0.0024}O_2$.

A proportion of each of the elements in the lithium-containing transition metal oxide can be obtained through analysis with an inductively coupled plasma (ICP). Specifically, approximately 5 g of the lithium-containing transition metal oxide is accurately weighed and added to a 200 ml beaker, then 100 ml of aqua regia is added, and then the mixture is heated and concentrated to a liquid volume of 20 to 25 ml, and cooled. Solids are separated with quantitative filter paper "No.5B" manufactured by Advantec. The filtrate and lotion are then added to a 100 ml measuring flask for constant volume dilution, and element contents are measured with the sequential ICP-type analyzer "IPIS 1000" manufactured by Nippon Jarrell-Ash Co., Ltd.

In some embodiments, based on the total weight of the positive electrode mixture layer, a proportion of the lithium-containing transition metal oxide is not greater than 99 wt%. In some embodiments, based on the total weight of the positive electrode mixture layer, the proportion of the lithium-containing transition metal oxide is not greater than 97.5 wt%. In some embodiments, based on the total weight of the positive electrode mixture layer, the proportion of the lithium-containing transition metal oxide is not greater than 97 wt%. In some embodiments, based on the total weight of the positive electrode mixture layer, the proportion of the lithium-containing transition metal oxide is not greater than 98 wt%. In some embodiments, based on the total weight of the positive electrode mixture layer, the proportion of the lithium-containing transition metal oxide is not greater than 95 wt%. In some embodiments, based on the total weight of the positive electrode mixture layer, the proportion of the lithium-containing transition metal oxide is not less than 85 wt%. In some embodiments, based on the total weight of the positive electrode mixture layer, the proportion of the lithium-containing transition metal oxide is not greater than 90 wt%. In some embodiments, based on the total weight of the positive electrode mixture layer, the proportion of the lithium-containing transition metal oxide is not greater than 92 wt%. In some embodiments, based on the total weight of the positive electrode mixture layer, the proportion of the lithium-containing transition metal oxide falls within a range defined by any two of the foregoing endpoints. When the proportion of the lithium-containing transition metal oxide in the positive electrode mixture layer falls within the foregoing ranges, the positive electrode mixture layer has high capacity and low resistance and facilitates the ease of formation of the positive electrode.

In some embodiments, the lithium-containing transition metal oxide contains first particles and second particles, where the first particles have a first median particle size, the second particles have a second median particle size, and the first median particle size is less than the second median particle size. The median particle size D50 can be measured by using a well-known laser diffraction/scattering particle size analyzer.

In some embodiments, the first median particle size is 0.5 $\mu$m to 10 $\mu$m. In some embodiments, the first median particle size is 1 $\mu$m to 8 $\mu$m. In some embodiments, the first median particle size is 2 $\mu$m to 6 $\mu$m. In some embodiments, the second median particle size is 11 $\mu$m to 30 $\mu$m. In some embodiments, the second median particle size is 12 $\mu$m to 25 $\mu$m. In some embodiments, the second median particle size is 13 $\mu$m to 20 $\mu$m.

The median particle size of the lithium-containing transition metal oxide can be adjusted by the following method: dropwise adding NaOH to an acidic aqueous solution of the transition metal element M1, followed by precipitation to obtain a hydroxide of M1; and sintering the hydroxide of M1 to obtain an oxide of M1. The median particle size of the lithium-containing transition metal oxide can be controlled by controlling the precipitation time, the precipitated particle size, and the particle size of the M1 oxide obtained by sintering.

In some embodiments, a discharge capacity of the positive electrode active material is less than a rechargeable capacity of the negative electrode active material to prevent lithium metal from unexpectedly precipitating onto the negative electrode during charging of the lithium-ion battery.

Density of the positive electrode mixture layer

In some embodiments, the density of the positive electrode mixture layer is not less than 3.5 g/cm$^3$. In some embodiments, the density of the positive electrode mixture layer is not less than 3.6 g/cm$^3$. In some embodiments, the density of the positive electrode mixture layer is not less than 3.8 g/cm$^3$. In some embodiments, the density of the positive electrode mixture layer is not greater than 4.6 g/cm$^3$. In some embodiments, the density of the positive electrode mixture layer is not greater than 4.4 g/cm$^3$. In some embodiments, the density of the positive electrode mixture layer is not greater than 4.2 g/cm$^3$. In some embodiments, the density of the positive electrode mixture layer falls within a range defined by any two of the foregoing endpoints. When the density of the positive electrode mixture layer falls within the foregoing ranges, the positive electrode mixture layer has good infiltrability, which helps improve performance of the electrochemical apparatus.

The density of the positive electrode mixture layer can be measured by using the following method: cutting to take a specified area of the positive electrode, using an electronic balance with a minimum scale of 1 mg to measure its weight W1, and using a micrometer with a minimum scale of 1 $\mu$m to measure a thickness T1 of the positive electrode; peeling off the positive electrode current collector, using the electronic balance to measure its weight W2, and using the micrometer to measure a thickness T2 of the positive electrode current collector; and recording W1-W2 as a weight of the positive electrode mixture layer, and T1-T2 as a thickness of the positive electrode mixture layer. The volume of the positive electrode mixture layer is calculated based on the thickness and area of the positive electrode mixture layer, and then the density of the positive electrode mixture layer is calculated based on the weight and volume of the positive electrode mixture layer.

Thickness of the positive electrode mixture layer

In some embodiments, the thickness of the positive electrode mixture layer is 30 $\mu$m to 300 $\mu$m. In some embodiments, the thickness of the positive electrode mixture layer is 50 $\mu$m to 280 $\mu$m. In some embodiments, the thickness of the positive electrode mixture layer is 80 $\mu$m to 250 $\mu$m. In some embodiments, the thickness of the positive electrode mixture layer is 100 $\mu$m to 200 $\mu$m. In some embodiments, the thickness of the positive electrode mixture layer is 30 $\mu$m, 50 $\mu$m, 80 $\mu$m, 100 $\mu$m, 120 $\mu$m, 150 $\mu$m, 180 $\mu$m, 200 $\mu$m, or falls within a range defined by any two of the foregoing values.

The thickness of the positive electrode mixture layer can be measured by using the following method: cutting to take a piece of the positive electrode, and using a micrometer with a minimum scale of 1 $\mu$m to measure a thickness T1 of the positive electrode; peeling off the positive electrode current collector, and using the micrometer to measure a thickness T2 of the positive electrode current collector; and recording T1-T2 as a thickness of the positive electrode mixture layer.

Conductive layer

In some embodiments, the positive electrode mixture layer further includes a conductive layer, and the conductive layer includes a conductive agent. In some embodiments, the conductive layer includes no positive electrode active material. Examples of the conductive agent include, but are not limited to, graphite, carbon black, or acetylene black.

In some embodiments, based on the total weight of the positive electrode mixture layer, a proportion of the conductive agent is not less than 1 wt%. In some embodiments, based on the total weight of the positive electrode mixture layer, the proportion of the conductive agent is not less than 1.1 wt%. In some embodiments, based on the total weight of the positive electrode mixture layer, the proportion of the conductive agent is not less than 1.2 wt%. In some embodiments, based on the total weight of the positive electrode mixture layer, the proportion of the conductive agent is not greater than 3 wt%. In some embodiments, based on the total weight of the positive electrode mixture layer, the proportion of the conductive agent is not greater than 2 wt%. In some embodiments, based on the total weight of the positive electrode mixture layer, the proportion of the conductive agent is not greater than 1.5 wt%. In some embodiments, based on the total weight of the positive electrode mixture layer, the proportion of the conductive layer falls within a range defined by any two of the foregoing values. The proportion of the conductive layer in the positive electrode mixture layer being within the foregoing ranges helps improve the density and capacity of the positive electrode mixture layer, thereby improving cycling performance of the electrochemical apparatus and reducing load characteristics of the electrochemical apparatus.

Binder

In some embodiments, the positive electrode mixture layer includes a binder. Examples of the binder include, but are not limited to, polyvinylidene fluoride or polytetrafluoroethylene.

In some embodiments, based on the total weight of the positive electrode mixture layer, a proportion of the binder is not less than 1 wt%. In some embodiments, based on the total weight of the positive electrode mixture layer, the proportion of the binder is not less than 1.3 wt%. In some embodiments, based on the total weight of the positive electrode mixture layer, the proportion of the binder is not less than 1.5 wt%. In some embodiments, based on the total weight of the positive electrode mixture layer, the proportion of the binder is not greater than 4 wt%. In some embodiments, based on the total weight of the positive electrode mixture layer, the proportion of the binder is not greater than 3 wt%. In some embodiments, based on the total weight of the positive electrode mixture layer, the proportion of the binder is not greater than 2 wt%. In some embodiments, based on the total weight of the positive electrode mixture layer, the proportion of the binder falls within a range defined by any two of the foregoing values. When the proportion of the binder in the positive electrode mixture layer is within the foregoing ranges, good adhesion exists between the positive electrode mixture layer and the positive electrode current collector, avoiding the possibility of the positive electrode being powdered and falling off, and thereby helping improve stability of the positive electrode.

Positive electrode current collector

The positive electrode current collector is not particularly limited to any type and may be any material known as being applicable to serve as a positive electrode current collector. Examples of the positive electrode current collector may include, but are not limited to, at least one of aluminum, aluminum alloy, nickel-plated aluminum, stainless steel, titanium, or tantalum, and carbon materials such as carbon cloth and carbon paper. In some embodiments, the positive electrode current collector is a metal material. In some embodiments, the positive electrode current collector is aluminum.

The form of the positive electrode current collector is not particularly limited. When the positive electrode current collector is a metal material, the positive electrode current collector may take forms including but not limited to a metal foil, a metal cylinder, a metal coil, a metal plate, a metal film, a sheet metal mesh, a punched metal, a foamed metal, and the like. When the positive electrode current collector is a carbon material, the positive electrode current collector may take forms including but not limited to a carbon plate, a carbon film, a carbon cylinder, and the like. In some embodiments, the positive electrode current collector is a metal film. In some embodiments, the metal film is a mesh.

In some embodiments, a thickness of the positive electrode current collector is 8 $\mu$m to 20 $\mu$m. In some embodiments, the thickness of the positive electrode current collector is 10 $\mu$m to 18 $\mu$m. In some embodiments, the thickness of the positive electrode current collector is 12 $\mu$m to 15 $\mu$m. In some embodiments, the thickness of the positive electrode current collector falls within a range defined by any two of the foregoing values.

In order to reduce the electronic contact resistance of the positive electrode current collector and the positive electrode active material layer, a conductive agent may be included in the surface of the positive electrode current collector. Examples of the conductive agent may include, but are not limited to, carbon and precious metals such as gold, platinum, and silver.

The method for preparing a positive electrode is not limited in this application. For example, the positive electrode may be prepared by using the following method: mixing two or more lithium-containing transition metal oxides having different median particle sizes in a specified weight ratio, adding a conductive agent and a binder as needed, and adding a solvent to obtain a positive electrode mixture slurry; applying the obtained positive electrode mixture slurry on the positive electrode current collector (such as aluminum foil), and drying the slurry to obtain a positive electrode mixture layer; and applying the positive electrode mixture layer on one or two surfaces of the positive electrode current collector, and performing a rolling step as needed to obtain a positive electrode.

II. Electrolyte

Another main feature of the electrochemical apparatus of this application is that the electrolyte contains lithium difluorophosphate, and based on a total weight of the electrolyte, a proportion of the lithium difluorophosphate is 0.001 wt% to 2 wt%. In some embodiments, based on the total weight of the electrolyte, the proportion of the lithium difluorophosphate is 0.01 wt% to 1 wt%. In some embodiments, based on the total weight of the electrolyte, the proportion of the lithium difluorophosphate is 0.05 wt% to 0.5 wt%. In some embodiments, based on the total weight of the electrolyte, the proportion of the lithium difluorophosphate is 0.1 wt% to 0.3 wt%. In some embodiments, based on the total weight of the electrolyte, the proportion of the lithium difluorophosphate is 0.001 wt%, 0.005 wt%, 0.01 wt%, 0.05 wt%, 0.1 wt%, 0.3 wt%, 0.5 wt%, 0.8 wt%, 1 wt%, 1.2 wt%, 1.5 wt%, 1.8 wt%, 2 wt%, or falls within a range defined by any two of the foregoing values. The proportion of the lithium difluorophosphate in the electrolyte being within the foregoing ranges helps improve the interval cycling performance and floating charge performance of the lithium-ion battery.

In some embodiments, X mg of lithium difluorophosphate in the electrolyte and a reaction area Y $m^2$ of the positive electrode mixture layer satisfy the following relationship: $10 \leq X/Y \leq 1\grave{a}0$. In some embodiments, X and Y satisfy the following relationship: $20 \leq X/Y \leq 70$. In some embodiments, X and Y satisfy the following relationship: $30 \leq X/Y \leq 50$. X and Y satisfying the foregoing relationships help further improve the interval cycling performance and floating charge performance of the lithium-ion battery.

The reaction area of the positive electrode mixture layer can be measured by using the following method: using a surface area meter (a full-automatic surface area measuring apparatus manufactured by Ohkura Riken Co., Ltd.) to predry the sample in a stream of nitrogen gas at 350°C for 15 minutes, and using a nitrogen-helium gas mixture with the nitrogen pressure relative to the atmospheric pressure being accurately adjusted to 0.3 to conduct tests by using single point BET nitrogen adsorption utilizing a gas flow method. The specific surface area ($m^2/g$) of the positive electrode mixture layer is measured by using this method. The specific surface area of the positive electrode mixture layer refers to a specific surface area of the entire positive electrode mixture layer including the positive electrode active material and the additives (binder, conductive agent, thickener, filler, and the like). A weight of the positive electrode mixture layer is measured, that is, the total weight of the positive electrode mixture layer including the positive electrode active material and the additives (binder, conductive agent, thickener, filler, and the like). The reaction area of the positive electrode mixture layer is calculated by using the following equation:

$$\text{Reaction area} = \text{specific surface area of the positive electrode mixture layer} \times \text{weight of the positive electrode mixture layer.}$$

In some embodiments, the electrolyte includes carbonate. In some embodiments, the electrolyte includes a carbonate and a carboxylate. In some embodiments, the carbonate includes at least one of a cyclic carbonate or a linear carbonate. The carbonate or a combination of the carbonate and the carboxylate helps form a passivation film on a surface of the electrode to improve the interval cycling performance and floating charge performance of the electrochemical apparatus.

In some embodiments, based on the total weight of the electrolyte, the proportion of the carbonate is 10 wt% to 90 wt%. In some embodiments, based on the total weight of the electrolyte, the proportion of the carbonate is 15 wt% to 85 wt%. In some embodiments, based on the total weight of the electrolyte, the proportion of the carbonate is 20 wt% to 75 wt%. In some embodiments, based on the total weight of the electrolyte, the proportion of the carbonate is 25 wt% to 65 wt%. In some embodiments, based on the total weight of the electrolyte, the proportion of the carbonate is 10 wt%, 15 wt%, 20 wt%, 25 wt%, 30 wt%, 35 wt%, 40 wt%, 45 wt%, 50 wt%, 60 wt%, 70 wt%, 80 wt%, 90 wt%, or falls within a range defined by any two of the foregoing values. The proportion of the carbonate in the electrolyte being within the foregoing range helps further improve the interval cycling performance and floating charge performance of the electrochemical apparatus.

In some embodiments, examples of the cyclic carbonate may include, but are not limited to, one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include, but are not limited to, one or more of the following: dimethyl carbonate, ethyl methyl carbonate, diethyl carbonate (DEC), methyl n-propyl carbonate, ethyl n-propyl carbonate, dipropyl carbonate, and the like. Examples of the linear carbonate substituted with fluorine may include, but are not limited to, one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, the carboxylate includes at least one of linear carboxylate or cyclic carboxylate.

In some embodiments, examples of the cyclic carboxylate may include, but are not limited to, one or more of the following: γ-butyrolactone and γ-valerolactone. In some embodiments, some hydrogen atoms in the cyclic carboxylate may be replaced with fluorine.

In some embodiments, examples of the linear carboxylates may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be replaced with fluorine. In some embodiments, examples of the fluorine-substituted linear carboxylate may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, the electrolyte further includes at least one of a dinitrile compound, a trinitrile compound, sultone, fluorocarbonate, or unsaturated ethylene carbonate.

In some embodiments, examples of the dinitrile compound may include, but are not limited to, one or more of the following: succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy) propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, or 1,6-dicyano-2-methyl-3-hexene.

In some embodiments, examples of the trinitrile compound may include, but are not limited to, one or more of the following: a polynitrile compound, and the polynitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, and 1,2,5-tris(cyanoethoxy)pentane.

In some embodiments, examples of the sultone may include, but are not limited to, one or more of the following: 1,3-propanesulfonate, 1-fluoro-1,3 -propanesulfonate, 2-fluoro-1,3-propanesulfonate, 3 -fluoro-1,3 -propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3 -fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene disulfonate, ethylene methane disulfonate, and the like.

In some embodiments, the fluoroethylene carbonate has a formula $C=O(OR_1)(OR_2)$, where $R_1$ and $R_2$ each are selected from an alkyl group or haloalkyl group having 1 to 6 carbon atoms. At least one of $R_1$ and $R_2$ is selected from a fluoroalkyl group having 1 to 6 carbon atoms. $R_1$ and $R_2$, optionally together with the atoms to which they are attached, form a 5- to 7-membered ring.

In some embodiments, examples of the fluoroethylene carbonate may include, but are not limited to, one or more of the following: fluoroethylene carbonate, cis-4,4-difluoroethylene carbonate, trans-4,4-difluoroethylene carbonate, 4,5-difluoroethylene carbonate, 4-fluoro-4-methyl ethylene carbonate, 4-fluoro-5-methyl ethylene carbonate, and the like.

In some embodiments, examples of the unsaturated ethylene carbonate may include, but are not limited to, one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinyl ethylene carbonate, 1-ethyl-2-vinyl ethylene carbonate, 1-n-propyl-2-vinyl ethylene carbonate, 1-methyl-2-vinyl ethylene carbonate, 1,1-divinylethylene carbonate, 1,2-divinylethylene carbonate, 1,1-dimethyl-2-methylene ethylene carbonate, 1,1-diethyl-2-methylene ethylene carbonate, and the like. In some embodiments, the unsaturated ethylene carbonate includes vinylidene carbonate, and can easily achieve better effects.

In some embodiments, the electrolyte further includes a cyclic ether. In some embodiments, examples of the cyclic ether may include, but are not limited to, one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, the electrolyte further includes a chain ether. In some embodiments, examples of the linear ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxy ethane, and 1,2-ethoxymethoxyethane.

In some embodiments, the electrolyte further includes a phosphorus-containing organic solvent. In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, tris (2,2,3,3,3-pentafluoropropyl) phosphate, and the like.

In some embodiments, the electrolyte further includes a sulfur-containing organic solvent. In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be replaced with fluorine.

In some embodiments, the electrolyte further includes a fluorine-containing solvent. In some embodiments, the fluorine-containing solvent includes, but is not limited to, one or more of the following: fluorobenzene, difluorobenzene, trifluorobenzene, tetrafluorobenzene, pentafluorobenzene, hexafluorobenzene, and trifluoromethylbenzene.

In some embodiments, the electrolyte includes one or more sulfur-oxygen double bond-containing compounds. In some embodiments, examples of the sulfur-oxygen double bond-containing compound may include, but are not limited to one or more of the following: cyclic sulfate, linear sulfate, linear sulfonate, cyclic sulfonate, linear sulfite, cyclic sulfite, and the like.

In some embodiments, examples of the cyclic sulfate may include, but are not limited to, one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate, and the like.

In some embodiments, examples of the linear sulfate may include, but are not limited to, one or more of the following: dimethyl sulfate, ethyl methyl sulfate, diethyl sulfate, and the like.

In some embodiments, examples of the linear sulfonate may include, but are not limited to, one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, ethyl 2-(methanesulfonyloxy) propionate, and the like.

In some embodiments, examples of the linear sulfite may include, but are not limited to, one or more of the following: dimethyl sulfite, ethyl methyl sulfite, diethyl sulfite, and the like.

In some embodiments, examples of the cyclic sulfite may include, but are not limited to, one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite, and the like.

In some embodiments, the electrolyte further includes one or more acid anhydrides. In some embodiments, examples of the acid anhydride may include, but are not limited to, one or more of cyclic phosphoric anhydride, carboxylic anhydride, disulfonic anhydride, and carboxylic acid sulfonic anhydride.

In some embodiments, examples of the cyclic phosphoric anhydride may include, but are not limited to, one or more of trimethylphosphoric acid cyclic anhydride, triethylphosphoric acid cyclic anhydride, and tripropylphosphoric acid cyclic anhydride.

In some embodiments, examples of the carboxylic anhydride may include, but are not limited to, one or more of succinic anhydride, glutaric anhydride, and maleic anhydride.

In some embodiments, examples of the disulfonic acid anhydride may include, but are not limited to, one or more of ethane disulfonic acid anhydride and propane disulfonic acid anhydride.

In some embodiments, examples of the carboxylic acid sulfonic anhydride may include, but are not limited to, one or more of sulfobenzoic anhydride, sulfopropionic anhydride, and sulfobutyric anhydride.

The electrolytic salt is not particularly limited. Any substance commonly known as being applicable to serve as an electrolytic salt can be used. For lithium secondary batteries, lithium salts are typically used. Examples of the electrolytic salt may include, but are not limited to, inorganic lithium salts such as $LiPF_6$, $LiBF_4$, $LiClO_4$, $LiAlF_4$, $LiSbF_6$, $LiTaF_6$, and $LiWF_7$; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates

salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical apparatus such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on a total weight of the electrolytic salt, a proportion of the salt selected from the group consisting of monofluorophosphate, borate, oxalate, and fluorosulfonate is greater than 0.01 wt% or greater than 0.1 wt%. In some embodiments, based on the total weight of the electrolytic salt, the proportion of the salt selected from the group consisting of monofluorophosphate, borate, oxalate, and fluorosulfonate is less than 20 wt% or less than 10 wt%. In some embodiments, the proportion of the salt selected from the group consisting of monofluorophosphate, borate, oxalate, and fluorosulfonate falls within a range defined by any two of the foregoing values.

In some embodiments, the electrolytic salt includes more than one substance selected from the group consisting of monofluorophosphate, borate, oxalate, and fluorosulfonate, and more than one other salt different from the more than one substance. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the total weight of the electrolytic salt, a proportion of the other salt is greater than 0.01 wt% or greater than 0.1 wt%. In some embodiments, based on the total weight of the electrolytic salt, the proportion of the other salt is less than 20 wt%, less than 15 wt%, or less than 10 wt%. In some embodiments, the proportion of the other salt falls within a range defined by any two of the foregoing values. The other salt having the foregoing proportion helps balance the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries may be used, and examples thereof may include, but are not limited to, vinylidene carbonate, succinic anhydride, biphenyls, cyclohexylbenzene, 2,4-difluoroanisole, propane sulfonate, propylene sulfonate, and the like. These additives may be used alone or in any combination. In addition, a proportion of these additives in the electrolyte is not particularly limited and may be set as appropriate to the types of the additives and the like. In some embodiments, based on the total weight of the electrolyte, the proportion of the additive is less than 5 wt%, within a range of 0.01 wt% to 5 wt%, or within a range of 0.2 wt % to 5 wt%.

III. Negative electrode

The negative electrode includes a negative electrode current collector and a negative electrode mixture layer disposed on one or both surfaces of the negative electrode current collector. The negative electrode mixture layer includes a negative electrode active material layer, where the negative electrode active material layer includes a negative electrode active material. The negative electrode active material layer may be one or more layers, and each of the plurality of layers of the negative electrode active material may contain the same or different negative electrode active materials. The negative electrode active material is any substance capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

As a current collector for holding the negative electrode active material, the negative electrode current collector may use any known current collector. Examples of the negative electrode current collector include, but are not limited to, metal materials such as aluminum, copper, nickel, stainless steel, and nickel plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal foil, a sheet metal mesh, a punched metal, a foamed metal, and the like. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 $\mu$m or greater than 5 $\mu$m. In some embodiments, the thickness of the negative electrode current collector is less than 100 $\mu$m or less than 50 $\mu$m. In some embodiments, the thickness of the negative electrode current collector falls within a range defined by any two of the foregoing values.

The negative electrode active material is not particularly limited, provided that it can reversibly absorb and release lithium ions. Examples of the negative electrode active material may include, but are not limited to, carbon materials such as natural graphite and artificial graphite; metals such as silicon (Si) and tin (Sn); oxides of metal elements such as Si and Sn; or the like. The negative electrode active material may be used alone or in combination.

The negative electrode mixture layer may further include a negative electrode binder. The negative electrode binder may enhance binding between particles of the negative electrode active material, and binding between the negative electrode active material and the current collector. The type of the negative electrode binder is not particularly limited, provided that its material is stable to the electrolyte or a solvent used in manufacturing of the electrode. In some embodiments, the negative electrode binder includes a resin binder. Examples of the resin binder include, but are not limited to, fluororesins, polyacrylonitrile (PAN), polyimide resins, acrylic resins, polyolefin resins, and the like. When an aqueous solvent is used to prepare a negative electrode mixture slurry, the negative electrode binder includes, but is not limited to, carboxymethyl cellulose (CMC) or its salt, styrene-butadiene rubber (SBR), polyacrylic acid (PAA) or its salt, polyvinyl alcohol, and the like.

The negative electrode may be prepared by using the following method: applying a negative electrode mixture slurry containing the negative electrode active material, the resin binder, and the like on the negative electrode current collector, and after drying, and performing rolling to form a negative electrode mixture layer on both sides of the negative electrode current collector, thereby obtaining the negative electrode.

IV Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include, but are not limited to, polyolefin, aromatic polyamide, polytetrafluoroethylene, polyethersulfone, glass filter, and the like. In some embodiments, the material of the separator is glass filter. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include, but are not limited to, a three-layer separator formed by laminating polypropylene, polyethylene, and polypropylene in order.

Examples of the material of the inorganic substance may include, but are not limited to, oxides such as aluminum oxide and silicon dioxide, nitrides such as aluminum nitride and silicon nitride, and sulfates (for example, barium sulfate and calcium sulfate). The form of the inorganic substance may include, but is not limited to, a granular or fibrous form.

The form of the separator may be a thin-film form, and examples thereof include, but are not limited to, a non-woven fabric, a woven fabric, a microporous film, and the like. In the thin-film form, the separator has a pore diameter of 0.01 $\mu$m to 1 $\mu$m and a thickness of 5 $\mu$m to 50 $\mu$m. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 $\mu$m.

The thickness of the separator is random. In some embodiments, the thickness of the separator is greater than 1 $\mu$m, greater than 5 $\mu$m, or greater than 8 $\mu$m. In some embodiments, the thickness of the separator is less than 50 $\mu$m, less than 40 $\mu$m, or less than 30 $\mu$m. In some embodiments, the thickness of the separator falls within a range defined by any two of the foregoing values. When the thickness of the separator falls within the foregoing range, its insulation performance and mechanical strength can be ensured, helping the rate performance and energy density of the electrochemical apparatus.

When a porous material such as a porous sheet or a nonwoven fabric is used as the separator, the porosity of the separator is random. In some embodiments, the porosity of the separator is greater than 20%, greater than 35%, or greater than 45%. In some embodiments, the porosity of the separator is less than 90%, less than 85%, or less than 75%. In some embodiments, the porosity of the separator falls within a range defined by any two of the foregoing values. When the porosity of the separator falls within the foregoing range, its insulation performance the mechanical strength can be ensured and film resistance can be suppressed, so that the electrochemical apparatus has good rate performance.

The average pore diameter of the separator is also random. In some embodiments, the average pore diameter of the separator is less than 0.5 $\mu$m or less than 0.2 $\mu$m. In some embodiments, the average pore diameter of the separator is greater than 0.05 $\mu$m. In some embodiments, the average pore diameter of the separator falls within a range defined by any two of the foregoing values. If the average pore diameter of the separator exceeds the foregoing range, a short circuit is likely to occur. When the average pore diameter of the separator falls within the foregoing range, film resistance can be suppressed while short circuit is prevented, so that the electrochemical apparatus has good rate performance.

V. Components of the electrochemical apparatus

The components of the electrochemical apparatus include an electrode assembly, a collector structure, an outer packing case, and a protective unit.

Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls within a range defined by any two of the foregoing values. When the occupancy of the electrode assembly falls within the foregoing range, the capacity of the electrochemical apparatus can be ensured, degradation of repeated charge/discharge performance and high temperature storage property caused by an increasing internal pressure can be suppressed, and thereby action of a gas release valve can be prevented.

Collector structure

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in an electrode area causes a higher internal resistance; therefore, it is also acceptable that more than two terminals are provided in the electrode to decrease the resistance. When the electrode assembly has the foregoing winding structure, more than two lead structures are provided at each of the positive electrode and the negative electrode, and are bundled at the terminals, so as to reduce the internal resistance.

Outer packing case

The material of the outer packing case is not particularly limited, provided that the material is a substance stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes, but is not limited to, a sealed packaging structure formed by depositing metal through laser welding, resistance welding, or ultrasonic welding; or a riveting structure formed by using the foregoing metal or the like with a resin pad disposed therebetween. The outer packing case using the laminated film includes, but is not limited to, a sealed packaging structure or the like formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

Protective unit

The protection unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

VI. Application

The electrochemical apparatus according to this application includes any apparatus in which electrochemical reactions take place. Specific examples of the apparatus include all kinds of primary batteries, secondary batteries, fuel batteries, solar batteries, or capacitors. Especially, the electrochemical apparatus is a lithium secondary battery, including a lithium metal secondary battery, a lithium-ion secondary battery, a lithium polymer secondary battery, or a lithium-ion polymer secondary battery.

This application also provides an electronic apparatus, including the electrochemical apparatus according to this application.

A purpose of the electrochemical apparatus in this application is not particularly limited. It can be used for any known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

**Examples**

The following describes performance evaluation performed based on Examples and Comparative Examples of the lithium-ion battery in this application.

**I. Preparation of a lithium-ion battery**

1. Preparation of a negative electrode

Artificial graphite, styrene-butadiene rubber, and sodium carboxymethylcellulose were mixed based on a mass ratio of 96%:2%:2% in deionized water. The mixture was stirred evenly to obtain a negative electrode slurry. The negative electrode slurry was coated onto a copper foil of 12 $\mu$m. After steps of drying, cold pressing, cutting, and tab welding, a negative electrode was obtained.

2. Preparation of a positive electrode

A positive electrode active material, a conductive material (Super-P), and polyvinylidene fluoride (PVDF) were mixed based on a mass ratio of 95%:2%:3% in N-methylpyrrolidone (NMP), and then an additive was added. The mixture was stirred evenly to obtain a positive electrode slurry. The positive electrode slurry was coated onto an aluminum foil of 12$\mu$m. After steps of drying, cold pressing, cutting, and tab welding, a positive electrode was obtained.

The positive electrode active materials used in Examples or Comparative Examples were commercially purchased, with the specifics shown in the following table:

| Positive electrode active material | Composition | Median particle size D50 ($\mu$m) |
|---|---|---|
| Material 1 | $LiCo_{0.998}Ti_{0.0004}Al_{0.0008}O_2$ | 10 |
| Material 2 | $LiCo_{0.998}Mg_{0.0008}Ti_{0.0004}Al_{0.0008}O_2$ | 10 |
| Material 3 | 70 wt% $LiCo_{0.998}Mg_{0.0008}Ti_{0.0004}Al_{0.0008}O_2$ | 15 |
| | 30 wt% $LiCo_{0.994}Mg_{0.0024}Ti_{0.0012}Al_{0.0024}O_2$ | 5 |
| Material 4 | 80 wt% $LiCo_{0.9988}Mg_{0.0008}Ti_{0.0004}O_2$ | 15 |
| | 20 wt% $LiCo_{0.9964}Mg_{0.0024}Ti_{0.0012}O_2$ | 5 |
| Material 5 | 80 wt% $LiCo_{0.998}Mg_{0.0008}Zr_{0.0004}Al_{0.0008}O_2$ | 15 |
| | 20 wt% $LiCo_{0.994}Mg_{0.0024}Zr_{0.0012}Al_{0.0024}O_2$ | 5 |
| Material 6 | 70 wt% $LiCo_{0.9988}Mg_{0.0008}Ti_{0.0004}O_2$ | 20 |
| | 30 wt% $LiCo_{0.9964}Mg_{0.0024}Ti_{0.0012}O_2$ | 5 |

The additives used in Examples or Comparative Examples were commercially purchased, with the specifics shown in the following table:

| Additive | Name (trade name) | Oxidation potential | Reduction potential | Surface tension |
|---|---|---|---|---|
| 1 | (2-ethylhexyl) acrylate | 4.75 V | 0.1 V | 38 mN/m |
| 2 | Arylate non-ionic fluorocarbon acrylate surfactant | 4.8 V | 0.2 V | 35 mN/m |
| 3 | Dodecyl methacrylate | 4.7 V | 0.2 V | 38 mN/m |
| 4 | Acrylic acid (ester) copolymer | 4.8 V | 0.2 V | 36 mN/m |
| 5 | Maleic and acrylic acid | 4.7 V | 0.3 V | 37 mN/m |
| 6 | Polyvinylpyrrolidone (PVP) | 4.5 V | 0.1 V | 45 mN/m |
| 7 | Polyether siloxane | 4.7 V | 0.5 V | 45 mN/m |
| 8 | Peregal | 4.6 V | 0.8 V | 47 mN/m |
| 9 | Hexadecylsulfonic acid sodium | 4.7 V | 0.7 V | 46 mN/m |

3. Preparation of an electrolyte

Under a dry argon environment, EC, PC, PP, and DEC (based on a weight ratio of 1:1:1:1) were mixed, and $LiPF_6$ and the lithium difluorophosphate were added. The mixture was made even to obtain a base electrolyte, where the concentration of $LiPF_6$ was 1.15 mol/L. Different amounts of additives were added to the base electrolyte, to obtain different electrolytes used in different examples and comparative examples.

Compositions of the electrolytes used in Examples are shown in the following table.

| Name of material | Abbreviation | Name of material | Abbreviation |
|---|---|---|---|
| Ethylene carbonate | EC | Propylene carbonate | PC |
| Diethyl carbonate | DEC | Ethyl propionate | EP |
| Propyl propionate | PP | $\gamma$-butyrolactone | GBL |
| Butanedinitrile | SN | Adiponitrile | ADN |
| Ethylene glycol di(2-cyanoethyl) ether | EDN | 1,3,6-hexanetricarbonitrile | HTCN |
| 1,2,3-tris(2-cyanoethoxy) propane | TCEP | Lithium difluorophosphate | $LiPO_2F_2$ |
| 1,3-propanesulfonate | PS | Fluoroethylene carbonate | FEC |

4. Preparation of a separator

A polyethylene (PE) porous polymer film was used as the separator.

5. Preparation of a lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Method for testing a thickness change rate of the positive electrode mixture layer

The positive electrode was die-cut into a disc shape with a diameter of $14\pm0.2$ mm, which was used as a test piece. A thickness (t0) of the center part of the test piece was measured. The test piece was immersed horizontally and left in diethyl carbonate at a temperature of $85\pm1°C$ for $120\pm0.3$ hours. The test piece was taken out after immersion, standing at room temperature for 30 minutes, and then a thickness (t1) of the center part of the test piece was measured. The thickness change rate of the positive electrode mixture layer was calculated by using the following equation:

$$\text{Thickness change rate} = (t1\text{-}t0)/t0\times100\%.$$

2. Method for measuring a reaction area (Y) of the positive electrode mixture layer

A surface area meter (a full-automatic surface area measuring apparatus manufactured by Ohkura Riken Co., Ltd.) was used to predry the sample in a stream of nitrogen gas at 350°C for 15 minutes, and a nitrogen-helium gas mixture with the nitrogen pressure relative to the atmospheric pressure being accurately adjusted to 0.3 was used to measure a specific area ($m^2$/mg) of the positive electrode mixture layer by using single point BET nitrogen adsorption utilizing a gas flow method. The reaction area (Y) of the positive electrode mixture layer is calculated by using the following equation:

$$Y=\text{specific surface area of the positive electrode mixture layer}\times\text{weight of}$$

$$\text{the positive electrode mixture layer.}$$

3. Method for testing an interval cycling capacity retention rate of the lithium-ion battery

At 50°C, the lithium-ion battery was charged at a constant current of 0.5C to 4.45 V, then constant-current charged to a current of 0.05C, and left standing for 20 hours, and then discharged to 3.0 V at a constant current of 0.5C. This was the first cycle. The lithium-ion battery experienced 200 such cycles under the foregoing conditions. "1C" refers to a current at which a lithium-ion battery is fully discharged in one hour. The interval cycling capacity retention rate of the lithium-ion battery was calculated by using the following equation:

Interval cycling capacity retention rate=(discharge capacity after 200 cycles/discharge capacity at the first cycle)×100%.

4. Method for testing floating charge performance of the lithium-ion battery

At 25°C, the lithium-ion battery was charged to 4.45 V at a constant current of 0.5C, then charged to 0.05C at a constant voltage of 4.45 V Then the lithium-ion battery was placed in an oven at 50°C, and continuously charged at a constant voltage of 4.45 V (with a cutoff current of 20 mA). Thickness change of the lithium-ion battery was monitored. The thickness of the lithium-ion battery at an initial 50% state of charge (SOC) was taken as a baseline, and the lithium-ion battery was recorded as failed when the thickness of the lithium-ion battery was increased by more than 20%. Floating charge time of the lithium-ion battery at 50°C until failure was recorded.

**III. Test result**

Table 1 shows impact of the thickness change rate of the positive electrode mixture layer on the performance of the lithium-ion battery in Examples and Comparative Examples. In Examples and Comparative Examples shown in Table 1, the positive electrode active material is material 1, and the proportion of the lithium difluorophosphate is 0.2 wt%.

**Table 1**

| | Thickness change rate | Additive | | Time until failure (hours) | Interval cycling capacity retention rate |
| --- | --- | --- | --- | --- | --- |
| | | Type | Proportion (ppm) | | |
| Comparative Example 1 | 20% | - | - | 60 | 53% |
| Comparative Example 2 | 15% | 6 | 1000 | 70 | 55% |
| Comparative Example 3 | 13% | 7 | 1000 | 67 | 56% |
| Comparative Example 4 | 16% | 8 | 1000 | 78 | 59% |
| Comparative Example 5 | 12% | 9 | 1000 | 80 | 53% |
| Example 1 | 10% | 1 | 1000 | 450 | 72% |
| Example 2 | 8% | 1 | 1500 | 460 | 74% |
| Example 3 | 7% | 1 | 2000 | 480 | 75% |
| Example 4 | 6% | 1 | 2500 | 510 | 78% |
| Example 5 | 5% | 1 | 3000 | 540 | 80% |
| Example 6 | 4% | 1 | 5000 | 200 | 71% |
| Example 7 | 5% | 2 | 2000 | 600 | 82% |

The results show that the additives and their proportion can impact the thickness change rate of the positive electrode mixture layer. The positive electrode mixture layer having a thickness change rate of less than 10% after being immersed in diethyl carbonate at 85°C for 120 hours can significantly improve the interval cycling capacity retention rate (at least 20%) and floating charge duration (extending 5-10 times) of the lithium-ion battery, that is, significantly improve the interval cycling performance and floating charge performance of the lithium-ion battery. On the basis of the positive electrode mixture layer having a thickness change rate of less than 10% after being immersed in diethyl carbonate at 85°C for 120 hours, a controlled proportion of the additive not greater than 3000 ppm may further improve the interval cycling performance and floating charge performance of the lithium-ion battery.

Table 2 shows the impact of the proportion of the lithium difluorophosphate in the electrolyte on performance of the lithium-ion battery. Comparative Examples 6 and 7 and Examples 8 to 12 differ from Example 3 only in the proportion listed in Table 2.

**Table 2**

| | Proportion of $LiPO_2F_2$ (wt%) | Time until failure (hours) | Interval cycling capacity retention rate |
|---|---|---|---|
| Comparative Example 6 | 0.0008 | 420 | 68% |
| Comparative Example 7 | 3 | 462 | 72% |
| Example 3 | 0.2 | 480 | 75% |
| Example 8 | 0.5 | 507 | 83% |
| Example 9 | 1 | 650 | 86% |
| Example 10 | 2 | 660 | 79% |
| Example 11 | 0.001 | 450 | 76% |
| Example 12 | 0.005 | 471 | 73% |

The results show that when the proportion of the lithium difluorophosphate in the electrolyte falls within a range of 0.001 wt% to 2 wt%, the lithium-ion battery has significantly improved interval cycling performance and floating charge performance.

Table 3 shows the impact of the positive electrode active material on performance of the lithium-ion battery. Examples 13 to 17 differ from Example 3 only in the positive electrode active materials listed in Table 3.

**Table 3**

| | Positive electrode active material | Thickness change rate | Time until failure (hours) | Interval cycling capacity retention rate |
|---|---|---|---|---|
| Example 3 | Material 1 | 7% | 480 | 75% |
| Example 13 | Material 2 | 5% | 510 | 81% |
| Example 14 | Material 3 | 4% | 550 | 83% |
| Example 15 | Material 4 | 3% | 620 | 85% |
| Example 16 | Material 5 | 2% | 650 | 87% |
| Example 17 | Material 6 | 2% | 668 | 89% |

The results show that when the positive electrode active material includes two lithium-containing transition metal oxides having different median particle sizes, the interval cycling performance and floating charge performance of the lithium-ion battery may be further improved. When the lithium-containing transition metal oxide contains Mg and at least one metal element selected from Ti, Zr, Ge, Nb, Al, and Sn, the interval cycling performance and floating charge performance of the lithium-ion battery are significantly improved.

Table 4 shows the impact of the relationship between the weight of the lithium difluorophosphate and the reaction area of the positive electrode mixture layer on performance of the lithium-ion battery. Examples 18 to 21 differ from Example 3 only in the parameters listed in Table 4.

**Table 4**

| | X (mg) | Y ($m^2$) | X/Y | Time until failure (hours) | Interval cycling capacity retention rate |
|---|---|---|---|---|---|
| Example 3 | 0.3 | 3 | 1 | 320 | 82% |
| Example 18 | 3.3 | 3 | 10 | 380 | 83% |
| Example 19 | 10 | 3 | 30 | 415 | 85% |
| Example 20 | 300 | 3 | 100 | 371 | 84% |
| Example 21 | 330 | 3 | 110 | 359 | 61% |

The results show that X mg of the lithium difluorophosphate in the electrolyte and the reaction area Y m$^2$ of the positive electrode mixture layer satisfying $10 \leq X/Y \leq 100$ help further improve the interval cycling performance and floating charge performance of the lithium-ion battery.

Table 5 shows impact of the additives in the electrolyte on performance of the lithium-ion battery. Examples 22 to 29 differ from Example 3 only in the parameters listed in Table 5.

**Table 5**

| | Additive | | Time until failure (hours) | Interval cycling capacity retention rate |
| --- | --- | --- | --- | --- |
| | Type | Proportion (wt%) | | |
| Example 3 | - | - | 320 | 82% |
| Example 22 | SN | 4 | 392 | 83% |
| Example 23 | ADN | 3 | 395 | 85% |
| Example 24 | HTCN | 3 | 595 | 84% |
| Example 25 | SN | 3 | 430 | 86% |
| Example 26 | HTCN | 1 | 555 | 89% |
| Example 27 | TCEP | 3 | 610 | 85% |
| Example 28 | PS | 0.5 | 410 | 87% |
| Example 29 | FEC | 2 | 405 | 85% |

The results show that the electrolyte further including a dinitrile compound, a trinitrile compound, sultone, fluorocarbonate, and/or unsaturated ethylene carbonate helps further improve the interval cycling performance and floating charge performance of the lithium-ion battery.

Table 6 shows the impact of the solvents in the electrolyte on performance of the lithium-ion battery. Examples 30 to 32 differ from Example 3 only in the electrolyte solvents listed in Table 6. Comparative Examples 8 to 10 differ from Comparative Example 1 only in the electrolyte solvents listed in Table 6.

**Table 6**

| | Solvents (weight ratio) | Time until failure (hours) | Interval cycling capacity retention rate |
| --- | --- | --- | --- |
| Example 3 | EC, PC, PP, and DEC (1:1:1:1) | 320 | 82% |
| Example 30 | EC, PC, EP, and DEC (1:1:1:1) | 315 | 81% |
| Example 31 | EC, PC, and DEC (1:1:1:1) | 300 | 80% |
| Example 32 | EC, PC, EP, PP, and DEC (1:1:1:1:1) | 350 | 86% |
| Comparative Example 1 | EC, PC, PP, and DEC (1:1:1:1) | 60 | 53% |
| Comparative Example 8 | EC and PC (1:1) | 32 | 43% |
| Comparative Example 9 | EMC and DEC (1:1) | 39 | 45% |
| Comparative Example 10 | EP and PP (1:1) | 45 | 44% |

The results show that when the electrolyte solvent contains a combination of a cyclic carbonate and a chain carbonate or a combination of a carbonate and a carboxylate, the interval cycling performance and floating charge performance of the lithium-ion battery may be further significantly improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an embodiment", "in another example", "in an example", "in a particular example", or "for example", are not necessarily references to the same embodiments or examples in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. An electrochemical apparatus, comprising a positive electrode, a negative electrode, and an electrolyte, wherein the positive electrode comprises a positive electrode current collector and a positive electrode mixture layer formed on the positive electrode current collector, wherein:

   the electrolyte contains lithium difluorophosphate, and based on a total weight of the electrolyte, a proportion of the lithium difluorophosphate is 0.001 wt% to 2 wt%; and
   the positive electrode mixture layer after being immersed in diethyl carbonate at 85°C for 120 hours has a thickness change rate of less than 10%.

2. The electrochemical apparatus according to claim 1, wherein the electrolyte comprises a carbonate, and the carbonate comprises a cyclic carbonate and a linear carbonate.

3. The electrochemical apparatus according to claim 1, wherein the electrolyte comprises a carbonate and a carboxylate.

4. The electrochemical apparatus according to claim 1, wherein the positive electrode mixture layer comprises an additive having a hydrophilic group and a lipophilic group.

5. The electrochemical apparatus according to claim 4, wherein the additive has at least one of the following characteristics:

   (a) an oxidation potential of not less than 4.5 V and a reduction potential of not greater than 0.5 V;
   (b) a surface tension of not greater than 40 mN/m;
   (c) comprising an unsaturated carboxylic acid group; and
   (d) a proportion of not greater than 3000 ppm based on a total weight of the positive electrode mixture layer.

6. The electrochemical apparatus according to claim 4, wherein the additive comprises at least one of 2-dodecyl acrylate, polyethylene glycol monomethyl ether acrylate, polyethylene glycol dimethacrylate, acrylic acid (2-ethylhexyl) acrylate, acrylate non-ionic fluorocarbon acrylate surfactant, dodecyl methacrylate, acrylic acid ester copolymer, copolymer of maleic and acrylic acid, or ethylene acrylic acid copolymer.

7. The electrochemical apparatus according to claim 1, wherein X mg of lithium difluorophosphate in the electrolyte and a reaction area Y $m^2$ of the positive electrode mixture layer satisfy the following relationship: $10 \leq X/Y \leq 100$.

8. The electrochemical apparatus according to claim 1, wherein the electrolyte further comprises at least one of a dinitrile compound, a trinitrile compound, sultone, fluorocarbonate, or unsaturated ethylene carbonate.

9. The electrochemical apparatus according to claim 1, wherein the positive electrode mixture layer comprises a positive electrode active material, and the positive electrode active material comprises lithium-containing transition metal oxides having different median particle sizes.

10. The electrochemical apparatus according to claim 9, wherein the lithium-containing transition metal oxide comprises a compound represented by a general formula (1):

$$Li_aM1_bM2_cM3_dO_2 \qquad (1)$$

wherein:

M1 is selected from at least one of Co, Ni, or Mn;
M2 is selected from at least one of Mg, Ti, Zr, Ge, Nb, Al, or Sn;
M3 is an element other than Li, M1, and M2;
$0.5 \leq a < 1.1$;
$0.8 \leq b < 1.2$;
$0.002 \leq c \leq 0.05$; and
$0 \leq d \leq 0.05$.

11. The electrochemical apparatus according to claim 9, wherein the lithium-containing transition metal oxide comprises Mg and at least one metal element selected from Ti, Zr, Ge, Nb, Al, and Sn.

12. An electronic apparatus, comprising the electrochemical apparatus according to any one of claims 1 to 11.

## INTERNATIONAL SEARCH REPORT

International application No.

**PCT/CN2020/094654**

### A. CLASSIFICATION OF SUBJECT MATTER

H01M 10/0567(2010.01)i; H01M 10/0525(2010.01)i; H01M 4/62(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 宁德新能源, 锂, 电池, 正极, 阴极, 不饱和, 羧酸, 氧化电位, 还原电位, 表面张力, 丙烯酸, 碳酸二乙酯, 二氟磷酸锂, 电解液, 添加剂, 浸, 厚度, 尺寸, li, lithium, battery, positive electrode, cathode, diethyl carbonate, LiPO2F2, dip+, unsaturated, carboxylic acid, electrolyte

### C. DOCUMENTS CONSIDERED TO BE RELEVANT

| Category* | Citation of document, with indication, where appropriate, of the relevant passages | Relevant to claim No. |
|---|---|---|
| A | CN 103208647 A (SAMSUNG SDI CO., LTD. et al.) 17 July 2013 (2013-07-17) description, paragraphs [0007]-[0070] | 1-12 |
| A | CN 104011920 A (ZEON CORPORATION) 27 August 2014 (2014-08-27) entire document | 1-12 |
| A | CN 110911753 A (DONGGUAN DONGYANG SOLAR SCIENCES RESEARCH & DEVELOPMENT CO., LTD.) 24 March 2020 (2020-03-24) entire document | 1-12 |
| A | US 2015288033 A1 (SAMSUNG SDI CO., LTD.) 08 October 2015 (2015-10-08) entire document | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2021** | **23 February 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/094654**

| Patent document cited in search report | | | Publication date (day/month/year) | Patent family member(s) | | | Publication date (day/month/year) |
|---|---|---|---|---|---|---|---|
| CN | 103208647 | A | 17 July 2013 | US | 9130246 | B2 | 08 September 2015 |
| | | | | EP | 2615680 | A1 | 17 July 2013 |
| | | | | KR | 20130082426 | A | 19 July 2013 |
| | | | | US | 2013177818 | A1 | 11 July 2013 |
| | | | | JP | 2013143381 | A | 22 July 2013 |
| | | | | EP | 2615680 | B1 | 08 March 2017 |
| CN | 104011920 | A | 27 August 2014 | CN | 104011920 | B | 29 June 2016 |
| | | | | JP | 6149730 | B2 | 21 June 2017 |
| | | | | WO | 2013099990 | A1 | 04 July 2013 |
| | | | | KR | 20140116075 | A | 01 October 2014 |
| | | | | KR | 101819067 | B1 | 16 January 2018 |
| CN | 110911753 | A | 24 March 2020 | None | | | |
| US | 2015288033 | A1 | 08 October 2015 | US | 9768471 | B2 | 19 September 2017 |
| | | | | KR | 20150116330 | A | 15 October 2015 |
| | | | | KR | 2164007 | B1 | 12 October 2020 |

Form PCT/ISA/210 (patent family annex) (January 2015)